# EUROPÄISCHE PATENTSCHRIFT

(11) **EP 2 133 612 B1**
(45) Veröffentlichungstag und Bekanntmachung des Hinweises auf die Patenterteilung: **02.05.2012**
(21) Anmeldenummer: 09007423.8
(22) Anmeldetag: 04.06.2009
(51) Int. Cl.: F16L 13/14

(54) **Verfahren zur Verbindung von zwei Werkstücken sowie Pressfitting hierfür**
Method for connecting two workpieces and pressure fitting for same
Procédé de raccordement de deux pièces usinées et raccord à presser correspondant

(30) Priorität: 11.06.2008 DE 102008027812
(43) Veröffentlichungstag der Anmeldung: 16.12.2009
(73) Patentinhaber: Novopress GmbH Pressen und Presswerkzeuge & Co. KG, 41460 Neuss (DE)
(72) Erfinder: Pasch, Horst, 47929 Grefrath (DE); Pfeiffer, Heinrich, 41564 Kaarst (DE)
(74) Vertreter: von Kreisler Selting Werner

(56) Entgegenhaltungen:
- EP-A1- 1 081 423
- EP-B1- 1 790 896
- DE-U1- 29 920 371

## Beschreibung

Die Erfindung betrifft ein Verfahren zur Verbindung von zwei Werkstücken, nämlich eines Pressfittings mit einem Rohr oder mit einem weiteren Preßfitting, mittels eines Pressgerätes, bei dem die Werkstücken ineinandergesteckt und dann das eine Werkstück und/oder das andere werkstück mit Hilfe des Pressgerätes radial im Bereich ihrer gegenseitigen Überlappung nach innen plastisch verformt wird bzw. werden, wobei im Bereich der Überlappung zumindest ein Formkörper vorgesehen ist, der beim Verpressen so beaufschlagt wird, dass er an zumindest einer Stelle durchtrennt wird. Die Erfindung bezieht sich des weiteren auf ein Pressfitting zum Verbinden mit einem Rohr oder einem weiteren Pressfitting, wobei das Pressfitting von Öffnungsrändern begrenzte Öffnungen für das Einschieben von Rohrenden aufweist und mit wenigstens einem Formkörper kombiniert ist.

Zum Verbinden von Rohrenden ist es bekannt, hülsenförmige Pressfittings mit an beiden Seiten vorgesehenen Öffnungen zu verwenden. Das Pressfitting wird über oder in die sich stirnseitig gegenüberstehenden Rohrenden - oder über oder in ein weiteres Pressfitting - geschoben und dann die Kombination aus Pressfitting und Rohrenden im Bereich ihrer gegenseitigen Überlappungen mittels eines Pressgerätes radial zusammengepresst. Das Pressfitting überbrückt dann den Abstand der beiden Rohrenden. Solche Rohrverbindungen und die zugehörigen Pressfittings sind beispielsweise aus der DE 1 187 870 C1 und der DE 299 08 561 U1 bekannt.

Die Verpressung geschieht in der Regel mit Hilfe von handgeführten Pressgeräten, die sich in ihrer häufigsten Ausführungsform im Grundaufbau gleichen. Beispiele hierfür sind der DE 10 106 003 044 A1, EP 0 451 806 B1 und der DE 42 40 724 C1 zu entnehmen. Die Pressgeräte haben eine Antriebseinrichtung, an deren Ende ein Presswerkzeug auswechselbar angekuppelt ist, das nach Art eines Presszange oder einer Pressschlinge ausgebildet ist. Die Presszange bzw. Pressschlinge hat zumindest zwei, teilweise aber auch mehr Pressbacken, die in Umfangsrichtung nebeneinander angeordnet sind und beim Pressvorgang mittels der Antriebseinrichtung aus einer Ausgangsposition radial nach innen in eine Endpressposition und umgekehrt bewegbar sind.

Um mit einem einzigen Pressgerät Rohrenden unterschiedlichen Durchmessers mit dazu passenden Pressfittings verbinden zu können, werden die Presegeräte meistens mit einem Satz von mehreren, an die jeweiligen Nenndurchmesser der Rohrenden bzw. Pressfittings angepassten Presswerkzeugen ausgeliefert. Für den jeweiligen Pressvorgang wird das passende Presswerkzeug mit der Antriebseinrichtung gekoppelt.

Für das Verbinden zweier Rohrenden wird das zu dem Nenndurchmesser des Rohrs passende Pressfitting teilweise über bzw. in das Rohr auf- bzw. eingeschoben. Dann wird das Pressgerät von außen her auf den Überlappungsbereich von Pressfitting und Rohr aufgesetzt. Durch Betätigung der Antriebseinrichtung werden dann die Pressbacken radial nach innen bewegt, wodurch zumindest das außenliegende Werkstück, meist aber auch das innenliegende Werkstück plastisch unter Verringerung des jeweiligen Durchmessers verformt wird bzw. werden.

Bei der Verbindung von Rohrenden ist es außerordentlich wichtig, dass die Verpressung ein für die Dichtigkeit der Rohrverbindung ausreichendes Maß hat. Erreichen die Pressbacken nicht die vorgesehene Endpressstellung, liegt eine Unterverpressung bzw. Fehlverpressung vor mit der Folge, dass es bei der Beaufschlagung der Rohrleitung mit der Flüssigkeit zu Flüssigkeitsverlusten kommt, die weitreichende Schäden im zugehörigen Bauwerk, in dem die Rohrleitung verlegt ist, haben können.

Zur Kontrolle des Erreichens der Endpresstellung ist es bekannt, am Pressgerät selbst Anzeige-, Mess-, Steuer- oder Regeleinrichtungen vorzusehen. Es sind jedoch auch Vorschläge gemacht worden, am Pressfitting bzw. Rohr selbst sichtbar zu machen, ob eine Verpressung ordnungsgemäß ausgeführt worden ist oder nicht, also ob die Endpressstellung tatsächlich erreicht worden ist. So ist in der EP 1 081 421 A1 ein Verfahren beschrieben, bei dem durch entsprechende Ausgestaltung der Pressfläche einer Pressbacke ein charakteristisches Prägezeichen in das Pressfitting plastisch eingeformt wird, dessen Ausprägung abhängig ist von der Qualität der verpressung. Allerdings ist dieses verfahren nicht besonders selektiv, da die vollständige Ausformung des Prägezeichens und damit das Erreichen der Endpressstellung nicht eindeutig feststellbar ist.

In der WO 02/21997 A1 ist ein Verfahren beschrieben, bei dem auf dem außenliegenden Bereich von Pressfitting und/oder Rohr der von dem Pressgerät bzw. den Pressbacken beaufschlagt wird, eine Beschichtung aufgetragen wird, die so beschaffen ist, dass sie ihr Aussehen durch den Pressvorgang visuell verändert. Dabei kann es sich bei der Beschichtung um eine Farbbeschichtung unterschiedlicher Art handeln. Die Beschichtung kann aber auch aus mikroverkapselten Parbstoffen (vgl. auch EP 1 081 421 A1) oder einer wärmeschrumpfbaren Kunststofffolie (DE 603 06 297 T2) bestehen.

Anstatt eines Beschichtungsauftrages kann auch ein aufgesteckter Formkörper, beispielsweise ein Ring oder dergleichen, vorgesehen sein (vgl. WO 01/21997 A1, Seiten 4 und 13). Die Ringe können aus Kunststoff bestehen und sind so ausgebildet, dass sie beim Verpressen von dem Presswerkzeug erfasst werden und dabei ihr Aussehen verändern, beispielsweise Druckmarkierungen erhalten oder eine Formänderung erleiden (DE 60 2005 000 499 T2). Auch bei diesen Beschichtungen bzw. Formkörpern ist nicht ausreichend sicher festzustellen, ob die Pressbacken beim Verpressen ihre Endpressstellung erreicht haben, also eine ordnungsgemäße Verpressung vorliegt und keine Unterverpressung.

Bei einem gattungsgemäßen Verfahren gemäß der EP 1 547 728 B1 wird ein Pressfitting, der für das Überschieben auf ein Rohrende bestimmt ist, außenseitig mit einem Ring versehen. Durch Einwirken der Pressbacken beim Pressvorgang wird der Ring durchtrennt. Hierzu weisen die Pressbacken an ihren Pressflächen vorstehende Stege auf, die das Durchtrennen des Rings beim Pressvorgang bewirken. Nachteilig bei diesem Verfahren ist, dass besonders ausgebildete Pressbacken für dieses verfahren erforderlich sind, Pressbacken mit solchen Ringen also nicht zur Verwendung bei schon vorhandenen Pressgeräten geeignet sind.

Ähnliche Ausbildungen sind der EP 1 790 896 A1 und EP 1 933 073 A1 zu entnehmen. Darin sind Pressfittings für das Einschieben in Rohrenden offenbart, wobei auf den verpressungsbereich der Pressfittings Presshülsen aufgeschoben sind, die einen Ringraum einschließen, in den das Rohrende eingeschoben werden kann. Auf die Presshülse aufgesetzt ist ein Pressanzeigering, der in den Pressbereich vorspringende Stege aufweist, die beim Pressvorgang durch das Presswerkzeug direkt beaufschlagt und dabei abgetrennt werden. Auch hierbei bedarf es einer besonderen Ausbildung der Pressbacken. Außerdem muss die Abtrennung der Stege nicht notwendigerweise Beweis für eine ordnungsgemäße Verpressung sein.

Ferner ist aus DE 299 20 371 U ein Pressfitting zum Verbinden mit einem Rohr bekannt, wobei zwischen dem Pressfitting und dem Rohr ein Formkörper vorgesehen ist. Nach erfolgter Verpressung wurde ein Teil des Formkörpers abgetrennt.

Der Erfindung liegt die Aufgabe zugrunde, ein Verfahren bereitzustellen, bei dessen Anwendung mit hoher Sicherheit erkannt werden kann, ob eine ordnungsgemäße Verpressung durchgeführt worden ist oder nicht, und das keine besondere Ausbildung des Pressgerätes erfordert. Eine zweite Aufgabe besteht darin, ein hierfür geeignetes Pressfitting für die Durchführung dieses Verfahrens zu finden.

Der erste Teil der Aufgabe wird erfindungsgemäß dadurch gelöst, dass ein Formkörper verwendet wird, der nach dem Zusammenstecken der Werkstücke teilweise in einen zwischen den Werkstücken freigelassenen Spalt einfasst und teilweise aus diesem nach außen herausragt, und dass nur bei einer ordnungsgemäßen Verpressung der aus dem Spalt herausragende Teil des Formkörpers von dem in dem Spalt sitzenden Teil des Formkörpers abgetrennt wird. Grundgedanke der Erfindung ist es also, einen Formkörper zu verwenden, der in den Spalt zwischen Pressfitting und Rohr - oder einem weiteren Pressfitting - passt, wobei der Formkörper so beschaffen, insbesondere so bemessen ist, dass sein im Spalt befindlicher Teil nur bei einer ordnungsgemäßen Verpressung, also bei Erreichen der Endpressstellung der Pressbacken, von dem aus dem Spalt herausragenden Teil des Formkörpers abgetrennt wird. Das Verfahren hat den Vorzug, dass anhand der Tatsache, ob eine Abtrennung stattgefunden hat oder nicht, eindeutig feststellbar ist, ob eine Unterverpressung vorliegt oder ob die Verpressung ausreichend ist. Die Abtrennung kann dadurch festgestellt werden, dass sich der aus dem Spalt herausragende Teil des Formkörpers von der Verpressstelle wegbewegen iässt oder von selbst abfällt. Liegt keine Abtrennung vor, ist der Formkörper nach dem Pressvorgang in dem Spalt zwischen den Werkstücken festgeklemmt. Dabei zeichnet sich dieses Verfahren dadurch aus, dass es keine besondere Anpassung des Pressgerätes erfordert, seine Anwendung also auch bei vorhandenen Pressgeräten möglich ist, und dass mit hoher Sicherheit feststellbar ist, ob eine ordnungsgemäße Verpressung stattgefunden hat oder nicht. Dies wird erfindungsgemäß dadurch erzielt, dass das verwendete Werkstück bzw. das verwendete Pressfitting an zumindest einer Stirnseite eine Ringwulst aufweist, so dass innenseitig eine Ringnut ausgebildet ist. Ein Ringsteg der Ringwulst ist hierbei nach innen gerichtet. Der Ringsteg gräbt sich beim Verpressen in die Außenseite des Rohrs ein und trennt dabei den Formkörper ab.

In Ausbildung der Erfindung ist vorgesehen, dass ein Formkörper verwendet wird, der als (Teil-)Ring ausgebildet ist, der sich zweckmäßigerweise um mehr als 180° erstreckt. Vorteilhafterweise wird ein zumindest bis auf einen Spalt geschlossener Ring verwendet.

In Sonderheit kann ein Formkörper verwendet werden, der wenigstens einen vorzugsweise sich in axialer Richtung erstreckenden Vorsprung aufweist, wobei der Formkörper auf das Werkstück derart platziert wird, dass der wenigstens eine Vorsprung in den Spalt hineinragt. Statt dessen kann die Ausbildung des Formkörpers auch umgekehrt sein, so dass der Vorsprung aus dem Spalt herausragt. Beim Verpressen wird der Vorsprung je nach Ausführung teilweise oder ganz abgetrennt. Es versteht sich, dass statt eines Vorsprungs auch mehrere Vorsprünge, zweckmäßigerweise über den Umfang des Formkörpers verteilt, vorgesehen sein können.

Der Formkörper kann vorzugsweise aus einem spröden Kunststoff bestehen. Er sollte so beschaffen sein, dass eine Abtrennung des in den Spalt hineinragenden Teils erst dann erfolgt, wenn die Pressbacken ihre Endpressstellung erreicht haben.

Zur Verbesserung dieser Trennwirkung sollte das werkstück, das über das andere werkstück gesteckt wird, stirnseitig radial so weit nach innen gebogen sein, dass dort vor dem Verpressen ein Spalt freibleibt.

Das erfindungsgemäße Verfahren ist unabhängig davon anwendbar, ob das Pressfitting in das Rohr eingeschoben oder auf das Rohr aufgeschoben wird. In vielen Fällen wird letzeres Verfahren durchgeführt werden. Bei diesem Verfahren ist es vorteilhaft, wenn der Formkörper vor dem Ineinanderstecken der Werkstücke mit dem einen Werkstück verbunden wird, das Werkstück also mit dem Formkörper in zusammenmontiertem Zustand geliefert wird. Vorzugsweise sollte dabei die Verbindung zwischen Formkörper und Werkstück Pressfitting formschlüssig sein, damit der Formkörper nicht von dem Werkstück abfallen kann.

Im Stand der Technik ist es bekannt, Pressfittings zu verwenden, die im Bereich zumindest einer Stirnseite einen Ringwulst mit innenseitig einer Ringnut ausbilden, in die ein Dichtungsring eingelegt list. In diesem Fall ist es von Vorteile wenn ein Formkörper verwendet wird, der am Außenumfang einen Vorsprung ausbildet, wobei Formkörper und Pressfitting so zusammengesetzt werden, dass der Vorsprung in die Ringnut einfasst. Dabei sollte die Ringnut in an sich bekannter Weise in einem nach innen gerichteten Ringsteg enden, der sich beim Verpressen in die Außenseite des Rohrs eingräbt und dabei den Formkörper durchtrennt.

Der zweite Teil der Aufgabe wird erfindungsgemäß dadurch gelöst, dass der Formkörper derart mit dem Pressfitting kombinierbar oder kombiniert ist, dass der Formkörper im Bereich des Öffnungsrandes teilweise in das Pressfitting hineinragt und teilweise aus diesem herausragt. Wenn das Pressfitting mit einem solchen Formkörper kombiniert wird, kann das vorbeschriebene, erfindungsgemäße Verfahren durchgeführt werden, so dass nach der Verpressung mit hoher Sicherheit festgestellt werden kann, ob sie ordnungsgemäß durchgeführt worden ist.

Pressfitting und Formkörper sollten eine miteinander verbundene Einheit bilden, wobei die Verbindung zwischen Pressfitting und Formkörper vorzugsweise formschlüssig ist. Auf diese Weise werden die Vorzüge des erfindungsgemäßen Verfahrens durch Verwendung einer einheitlichen Kombination von Pressfitting und Formkörper verwirklicht.

Die formschlüssige Verbindung zwischen Pressfitting und Formkörper kann auf verschiedenste weise geschehen. So kann der Formkörper an dem Pressfitting angeklippt sein, beispielsweise durch Einrasten komplementärer Rastelemente.

Der Formkörper ist zweckmäβigerweise als (Teil-)Ring ausgebildet, der sich vorzugsweise über mehr als 180° erstreckt. Er kann zumindest bis auf einen Spalt geschlossen ausgebildet sein. Zur formschlüssigen Verbindung zwischen Pressfitting und Formkörper kann letzter außenseitig zumindest einen vorsprung aufweisen, der in zumindest eine Ausnehmung an der Innenseite des Pressfittings passt oder einfasst. Sofern der Vorsprung als Ringsteg ausgebildet ist, sollte die Ausnehmung im Pressfitting eine Ringnut bilden.

Nach einem weiteren Merkmal der Erfindung ist vorgesehen, dass der Pressfitting in an sich bekannter Weise im Bereich der Öffnung wenigstens eine Ringnut aufweist, in die ein Dichtungsring eingelegt ist. Über diese Ringnut kann dann der Formkörper formschlüssig mit dem Pressfitting verbunden werden, wenn er außenseitig einen Vorsprung, beispielsweise in Form des schon erwähnten Ringsteges, hat. Die Öffnung des Pressfittings sollte von einem radial nach innen gerichteten Ringsteg begrenzt sein.

Wie schon erwähnt, ist es zweckmäßig, dass der Formkörper zumindest einen Vorsprung aufweist, der teilweise in das Pressfitting hineinragt oder teilweise aus diesem herausragt, wobei sich der Vorsprung bzw. die Vorsprünge zweckmäßigerweise axial erstreckt bzw. erstrecken. Bei einem Pressfitting mit vormontiertem Formkörper empfiehlt sich die Ausführungsform mit aus dem Pressfitting herausragenden Vorsprüngen. Dabei sollten über den Umfang der Öffnung des Pressfittings verteilt mehrere Vorsprünge vorhanden sein. Beim Abtrennen der Vorsprünge fallen diese von selbst ab, was für die Bedienungsperson ein sicheres Zeichen ist, dass eine ordnungsgemäße Verpressung vorliegt.

Es versteht sich, dass eine bevorzugte Ausführungsform des erfindungsgemäßen Pressfittings darin besteht, dass er an beiden Seiten Öffnungen aufweist, denen jeweils ein Formkörper zugeordnet ist, wobei vorzugsweise eine zum Mittenquerschnitt symmetrische Ausbildung sowohl des Pressfittings als auch des jeweils zugehörigen Formkörpers vorgesehen sein sollte.

Schließlich ist nach der Erfindung vorgesehen, dass in zumindest eine Öffnung des Pressfittings ein Rohr eingesteckt ist, wobei zwischen Öffnungsrand des Pressfittings und Rohr ein Ringspalt vorhanden ist, in den der Formkörpe teilweise einfasst.

In der Zeichnung ist die Erfindung anhand von Ausführungsbeispielen näher veranschaulicht. Es zeigen:
- Figur 1: den Verbindungsbereich zwischen einem Rohr und einem Pressfitting vor dem Verpressen in einer Schrägansicht;
- Figur 2: den Verbindungsbereich gemäß Figur 1 in einem Axialschnitt;
- Figur 3: den Verbindungsbereich gemäß Figur 2 in einem vergrößerten Ausschnitt;
- Figur 4: den Verbindungsbereich gemäß den Figuren 1 bis 3 nach dem Verpressen in Schrägansicht;
- Figur 5: den Verbindungsbereich zwischen einem Rohr und einem Pressfitting vor dem Ineinanderstecken in einem Axialschnitt;
- Figur 6: den Verbindungsbereich zwischen dem Rohr und dem Pressfitting gemäß Figur 5 nach dem Inein- anderstecken in einer Schrägansicht;
- Figur 7: den Verbindungsbereich gemäß Figur 6 in einem Axialschnitt;
- Figur 8: den Verbindungsbereich gemäß den Figuren 6 und 7 nach dem Verpressen in Schrägansicht und
- Figur 9: den Verbindungsbereich gemäß Figur 8 im Axial- schnitt.

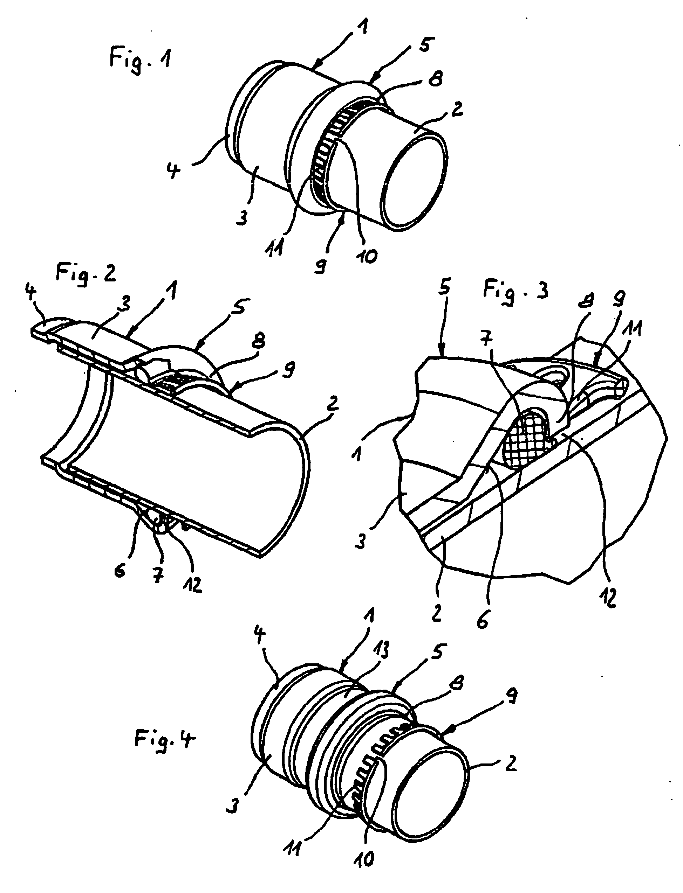

Die in den Figuren 1 bis 4 dargestellte Rohrverbindung besteht aus einen nur zur Hälfte dargestellten Pressfitting 1 und einem Rohr 2, von dem nur dessen Rohrende gezeichnet ist. Das Rohr 2 ist in das Pressfitting 1 über dessen stirnseitige Öffnung eingeschoben.

Das hülsenförmige Pressfitting 1 hat einen Zylinderabschnitt 3 mit einer als Anschlag für das Rohr 2 dienenden, mittig liegenden und nur teilweise dargestellten Einschnürung 4. Am freien Ende weist das Pressfitting 1 einen nach außen gewölbten Ringwulst 5 auf, der innenseitig eine Ringnut 6 ausbildet, in die ein Dichtungsring 7 eingelegt ist. Stirnseitig endet der Ringwulst 5 in einem radial nach innen gerichteten Ringsteg 8, dessen Innenseite den Öffnungsrand der dort vorhandenen Fittingöffnung bildet.

Auf das Rohr 2 aufgesteckt ist ein Kunststoffring 9, der das Rohr 2 bis auf einen Spalt 10 vollständig umgibt. Das Kunststoffmaterial, aus dem der Kunststoffring 9 besteht, ist relativ hart. Der Kunststoffring 9 ist aber so elastisch, dass er im Bereich des Spaltes 10 so weit aufgebogen werden kann, dass er von der Seite her auf das Rohr 2 aufgesteckt werden kann. Der Kunststoffring 9 liegt dann unter Vorspannung auf der Außenseite des Rohrs 2 an, d.h. sein (spannungsloser) Durchmesser ist geringer als der Außendurchmesser des Rohrs 2.

Der Kunststoffring 9 hat eine Vielzahl von sich axial in Richtung auf das Pressfitting 1 erstreckenden, zahnartigen Vorsprüngen - beispielhaft mit 11 bezeichnet -, die in den Spalt 12 zwischen Ringsteg 8 und Außenseite des Rohrs 2 bis zu dem Dichtungsring 7 hineinragen. Diese Stellung des Kunststoffrings 9 ist den Figuren 1 bis 3 zu entnehmen.

Zur Verbindung des Presstittings 1 mit dem Rohr 2 wird auf das Pressfitting 1 von der Seite her ein Pressgerät im Überlappungsbereich von Rohr 2 und Pressfitting 1 aufgesetzt, wie es beispielsweise aus der DE 10 2006 003 044 A1 oder der EP 0 451 806 B1 bekannt ist. Die Pressbacken des Pressgerätes umschließen das Pressfitting 1 zunächst nur teilweise. Durch Betätigung der Antriebseinrichtung des Pressgerätes werden die Pressbacken radial nach innen bewegt und bewirken hierdurch - wie Figur 4 zu entnehmen ist - eine Einschnürung 13 unmittelbar benachbart des Ringwulstes 5 und verringern dessen Durchmesser mit der Folge, dass der Ringsteg 8 mit der Außenseite des Rohrs 2 in Kontakt kommt und dort ebenfalls eine ringnutartige Einschnürung des Rohrs 2 erzeugt, d.h. die innenseitige Stirnseite des Ringsteges 8 gräbt sich ein wenig in die Oberfläche des Rohrs 2 ein. Dabei werden die in den Spalt 12 hineinragenden Teile der Vorsprünge 11 von dem außenliegenden Teil des Kunststoffrings 9 abgetrennt, wenn die Pressbacken des Pressgerätes ihre vorgesehene Endpressstellung erreicht haben, die Verpressung des Pressfittings 1 und auch des Rohrs 2 also ordnungsgemäß ist. In Figur 4 ist der Kunststoffring 9 von dem Pressfitting 1 weggeschoben, d.h. es hat eine Abtrennung der in den Spalt 12 ragenden Teile der Vorsprünge 11 stattgefunden, und es liegt eine ausreichende, dauerhafte Dichtigkeit garantierende Verpressung vor.

Ist die Verpressung unvollkommen, erreichen also die Pressbacken nicht ihre Endpressstellung, wird der Ringsteg 8 nicht weit genug radial nach innen bewegt, so dass die in den Spalt 12 ragenden Teile der Vorsprünge 11 nicht abgetrennt werden. Der Kunststoffring 9 ist dann in dem Spalt 12 festgeklemmt und kann nicht entfernt werden.

Zur Verbindung des Pressfittings 1 mit einem sich an das Rohr 2 anschließenden Rohr ist das Pressfitting 1 in dem nicht gezeigten, an die Einschnürung 4 anschließenden Teil spiegelbildlich ausgebildet, d.h. es hat an dem dortigen stirnseitigen Ende ebenfalls eine Öffnung, die von einem Ringwulst mit eingelegtem Dichtungsring begrenzt wird. Dort wiederholt sich der vorbeschriebene Vorgang, wobei ebenfalls ein Kunststoffring der hier gezeigten Art in der vorbeschriebenen weise verwendet wird.

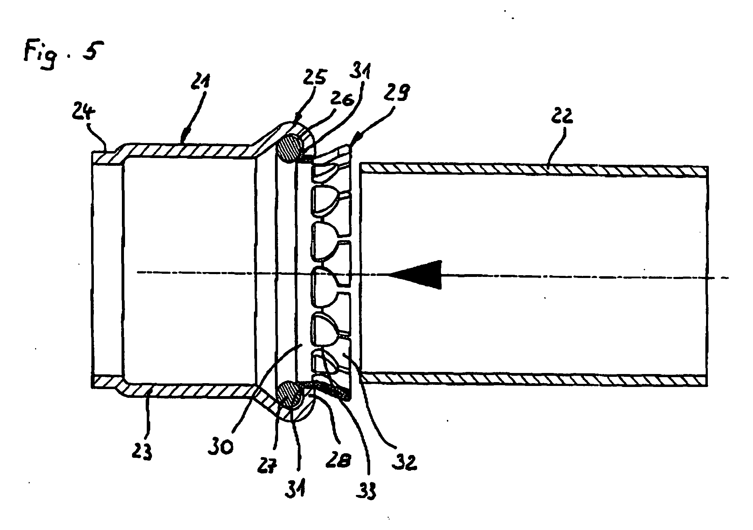

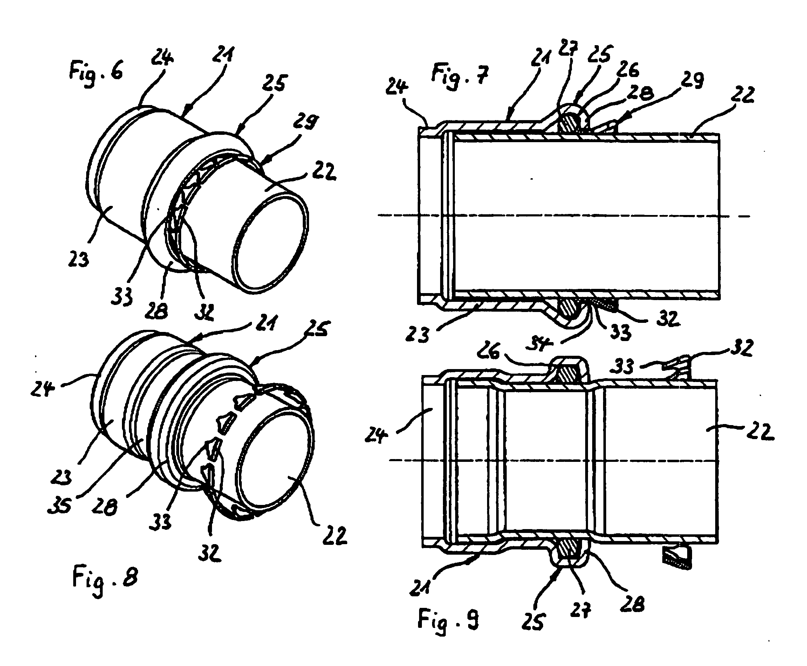

Die in den Figuren 5 bis 9 dargestellte Rohrverbindung besteht ebenfalls aus einem nur zur Hälfte dargestellten Pressfitting 21 und einem Rohr 22, von dem nur dessen Rohrende gezeigt ist. Das Rohr 22 befindet sich in der Darstellung gemäß Figur 5 noch außerhalb des Pressfittings 21, jedoch in den Figuren 6 bis 9 in der Endposition, d.h. eingesteckt in das Pressfitting 21.

Das hülsenförmige Pressfitting 21 hat einen zylinderabschnitt 23 mit einer als Anschlag für das Rohr 22 dienenden, mittig liegenden, und nur teilweise dargestellten Einschnürung 24. Am freien Ende weist das Pressfitting 21 einen nach außen gewölbten Ringwulst 25 auf, der innenseitig eine Ringnut 26 ausbildet, in die ein Dichtungsring 27 in Form eines O-Rings eingelegt ist. Stirnseitig endet der Ringwulst 25 in einem radial nach innen gerichteten Ringsteg 28.

In das Pressfitting 21 eingesteckt ist ein Kunststoffring 29, der an einer Stelle geteilt ist, so dass sein Durchmesser für Montagezwecke auch verringert werden kann. Das Kunststoffmaterial, aus dem der Kunststoffring 9 besteht, ist ebenfalls relativ hart. Der Kunststoffring 29 hat ein Ringsegment 30, mit dem er an der Innenseite der Ringstegs 28 anliegt und das außenseitig einen Ringvorsprung 31 aufweist. Dieser fasst in die Ringnut 26 zwischen Dichtungsring 27 und Ringsteg 28 ein und wird auf diese Weise in der in Figur 5 gezeigten Stellung gehalten. An das Ringsegment 30 schließen sich eine Vielzahl von sich axial erstreckenden, nach außen aus dem Pressfitting 21 herausragenden vorsprüngen - beispielhaft mit 32 bezeichnet - an, die mit dem Ringsegment 30 über schmale, zu den Vorsprüngen 32 gehörenden Stege - beispielhaft mit 33 bezeichnet - verbunden sind und in etwa eine Dreiecksform haben. Die Vorsprünge 32 sind leicht nach außen gewinkelt, bilden also insgesamt eine konusringartige Kette, die sich in Richtung auf das Pressfitting 21 bis hin zu dem Ringsegment 30 verjüngt.

In den Figuren 6 und 7 ist die Situation nach Einstecken des Rohrs 22 in das Pressfitting 21 dargestellt. Zu sehen ist, dass zwischen Innenseite des Ringstegs 28 und Außenseite des Rohrs 22 ein Spalt 34 vorhanden ist, der von dem Ringsegment 30 durchsetzt wird, allerdings nur teilweise. Die zu den Vorsprüngen 32 gehörenden Stege 33 beginnen schon innerhalb des Pressfittings 21 und setzen sich dann nach außen hin fort.

Zur Verbindung des Pressfittings 21 mit dem Rohr 22 wird genauso verfahren wie bei dem Ausführungsbeispiel gemäß den Figuren 1 bis 4. Es wird ein Pressgerät von der Seite her im Überlappungsbereich von Rohr 22 und Pressfitting 21 aufgesetzt, und durch Betätigung der Antriebseinrichtung des Pressgeräts wird eine Einschnürung 35 unmittelbar benachbart des Ringwulstes 25 eingeprägt und hierdurch dessen Durchmesser mit der Folge verringert, dass der Ringsteg 28 mit der Außenseite des Rohrs 22 in Kontakt kommt und dort ebenfalls eine Einschnürung des Rohrs 22 erzeugt, d.h. die innenseitige Stirnseite des Ringsteges 28 gräbt sich ein wenig in die Oberfläche des Rohrs 22 ein. Dabei werden die aus dem Spalt 34 herausragenden Vorsprünge 32 im Bereich der Stege 33 durchtrennt, wenn die Pressbacken des Pressgerätes ihre vorgesehene Endpressstellung erreicht haben, die Verpressung des Pressfittings 21 und auch des Rohrs 22 also ordnungsgemäß ist. Diese Situation ist in den Figuren 8 und 9 zu sehen. Die abgetrennten Teile der Vorsprünge 32 sind hier noch als Ring aneinandergereiht dargestellt. Tatsächlich fallen sie jedoch unmittelbar nach dem Abtrennen von dem Rohr 22 ab.

Ist die Verpressung unvollkommen, erreichen also die Pressbacken nicht ihre Endpressstellung, wird der Ringsteg 28 nicht weit genug radial nach innen bewegt, so dass die Vorsprünge 32 nicht vollständig durchtrennt werden. Für die Bedienungsperson ist dann erkennbar, dass es nicht zu einer ordnungsgemäßen Verpressung gekommen ist.

## Patentansprüche

1. Verfahren zur Verbindung von zwei Werkstücken, nämlich eines Pressfittings (1, 21) mit einem Rohr (2, 22) oder mit einem weiteren Pressfitting, mittels eines Pressgerätes, bei dem die Werkstücke ineinandergesteckt und dann die Werkstücke mit Hilfe des Pressgerätes im Bereich ihrer gegenseitigen Überlappung radial nach innen plastisch verformt werden, wobei im Bereich der Überlappung zumindest ein Formkörper (9, 29) vorgesehen ist, der beim Verpressen derart beaufschlagt wird, dass er an zumindest einer Stelle durchtrennt wird,
wobei der Formkörper (9, 29) nach dem Zusammenstecken der Werkstücke teilweise in einen zwischen den Werkstücken freigelassenen Spalt (12, 34) einfasst und teilweise aus diesem nach außen herausragt und dass nur bei einer ordnungsgemäßen Verpressung der aus dem Spalt (12, 34) herausragende Teil des Formkörpers (9, 29) von dem in dem Spalt (12, 34) sitzenden Teil des Formkörpers (9, 29) abgetrennt wird,
**dadurch gekennzeichnet, dass**
im Bereich zumindest einer Stirnseite eines der Werkstücke eine Ringwulst (5, 25) mit innenseitig einer Ringnut (6, 26) ausgebildet wird,
wobei der Ringwulst (5, 25) in einen nach innen gerichteten Ringsteg (8, 28) endet, der sich beim Verpressen in die Außenseite des Rohrs (2, 22) eingräbt und dabei den Formkörper (9, 29) durchtrennt.

2. Verfahren nach Anspruch 1, **dadurch gekennzeichnet, dass** ein Formkörper verwendet wird, der als (Teil-)Ring (9, 29) ausgebildet ist, der sich insbesondere nach dem Aufstecken um mehr als 180° erstreckt, wobei insbesondere ein zumindest bis auf einen Spalt (10) geschlossener Ring (9, 29) verwendet wird.

3. Verfahren nach Anspruch 1 oder 2, **dadurch gekennzeichnet, dass** ein Formkörper (9, 29) verwendet wird, der wenigstens einen Vorsprung (11, 32) aufweist, und dass der Formkörper (9, 29) so platziert wird, dass der bzw. die Vorsprünge (11, 32) in den Spalt (12, 34) hineinragen oder aus diesem herausragen.

4. Verfahren nach einem der Ansprüche 1 bis 3, **dadurch gekennzeichnet, dass** ein Formkörper (9, 29) aus insbesondere sprödem Kunststoff verwendet wird.

5. Verfahren nach einem der Ansprüche 1 bis 4, **dadurch gekennzeichnet, dass** ein Werkstück (1, 21) verwendet wird, das über das andere Werkstück (2, 22) gesteckt wird und das stirnseitig radial so weit nach innen gebogen ist, dass dort vor dem Verpressen ein Spalt (12, 34) freibleibt und/ oder dass ein Pressfitting als Werkstück (1, 21) verwendet wird, der auf das Rohr (2, 22) aufschiebbar ist.

6. Verfahren nach einem der Ansprüche 1 bis 5, **dadurch gekennzeichnet, dass** der Formkörper (9, 29) vor dem Ineinanderstecken der Werkstücke mit dem einen Werkstück insbesondere formschlüssig verbunden wird.

7. Verfahren nach einem der Ansprüche 1 bis 6, **dadurch gekennzeichnet, dass** ein Formkörper (29) verwendet wird, der am Außenumfang einen Vorsprung (31) ausbildet, und dass Formkörper (29) und Werkstück so zusammengesetzt werden, dass der Vorsprung (31) in die Ringnut (26) einfasst.

8. Hülsenförmiges Pressfitting (1, 21) zum Verbinden mit einem Rohr (2, 22), wobei das Pressfitting (1, 21) von Öffnungsrändern begrenzte Öffnungen für das Einschieben von Rohren (2 , 22) aufweist und mit wenigstens einem Formkörper (9, 29) kombiniert ist, wobei der Formkörper (9, 29) derart mit dem Pressfitting (1, 21) kombinierbar oder kombiniert ist, dass der Formkörper (9, 29) im Bereich des Öffnungsrandes teilweise in das Pressfitting (1, 21) hineinragt und teilweise aus diesem herausragt,
**dadurch gekennzeichnet, dass**
der Pressfitting (1, 21) im Bereich der Öffnung wenigstens eine Ringnut (6, 26) aufweist, wobei die Öffnung von einem radial nach innen gerichteten Ringsteg (8, 28) begrenzt ist.

9. Pressfitting nach Anspruch 8, **dadurch gekennzeichnet, dass** Pressfitting (21) und Formkörper (29) formschlüssig miteinander verbunden sind, vorzugsweise miteinander verklippt sind und insbesondere komplementäre Rastelemente (26, 31) aufweisen.

10. Pressfitting nach Anspruch 8 oder 9, **dadurch gekennzeichnet, dass** der Formkörper als (Teil-)Ring (9, 29) ausgebildet ist, der sich insbesondere über mehr als 180° erstreckt und der vorzugsweise zumindest bis auf einen Spalt (10) geschlossen ausgebildet ist.

11. Pressfitting nach einem der Ansprüche 8 bis 10, **dadurch gekennzeichnet, dass** der Formkörper (29) außenseitig zumindest einen Vorsprung (31) aufweist, der in zumindest eine Ausnehmung an der Innenseite des Pressfittings (21) passt oder einfasst, wobei vorzugsweise der Vorsprung als Ringsteg (31) und die Ausnehmung als Ringnut (26) ausgebildet sind.

12. Pressfitting nach einem der Ansprüche 8 bis 11, **dadurch gekennzeichnet, dass** der Formkörper (9, 29) zumindest einen Vorsprung (11, 32) aufweist, der teilweise in das Pressfitting (1, 21) hineinragt oder teilweise aus diesem herausragt, insbesondere dass der Formkörper (9, 29) über den Umfang der Öffnung des Pressfittings (1, 21) verteilt mehrere Vorsprünge (11, 32) aufweist und/ oder der Vorsprung bzw. die Vorsprünge (11, 32) sich axial erstreckt bzw. erstrecken.

13. Pressfitting nach einem der Ansprüche 8 bis 12, **dadurch gekennzeichnet, dass** der Formkörper (9, 29) aus insbesondere sprödem Kunststoff besteht.

14. Pressfitting nach einem der Ansprüche 8 bis 13, **dadurch gekennzeichnet, dass** das Pressfitting (1, 21) an beiden Stirnseiten jeweils eine Öffnung für das Einschieben von Rohren (2, 22) aufweist und dass jeder Öffnung ein Formkörper (9, 29) zugeordnet ist.

15. Pressfitting nach einem der Ansprüche 8 bis 14, **dadurch gekennzeichnet, dass** in zumindest eine Öffnung des Pressfittings (1, 21) ein Rohr (2, 22) eingesteckt ist, wobei zwischen Öffnungsrand des Pressfittings (1, 21) und Rohr (2, 22) ein Ringspalt (12, 34) vorhanden ist, in den der Formkörper (9, 29) teilweise einfasst.

## Claims

1. Method for connecting two workpieces, namely for connecting a press fitting (1, 21) with a pipe (2, 22) or with another press fitting, by means of a pressing device, wherein the workpieces are inserted one into the other, and wherein the workpieces are thereafter plastically deformed radially inward in the region of their mutual overlap by means of the pressing device, at least one shaped body (9, 29) being arranged in the overlap area, which shaped body is acted upon during pressing such that it is severed at least at one site,
wherein, after the workpieces have been inserted one into the other, the shaped body (9, 29) partly engages into a gap (12, 34) left between the two workpieces and partly protrudes outward therefrom, and wherein the part of the shaped body (9, 29) protruding from the gap (12, 34) is severed from the part of the shaped body (9, 29) sitting in the gap (12, 34) only in case of proper pressing,
**characterized in that**
an annular bead (5, 25) is formed in the region of at least one front end of one of the workpieces, said bead having an annular groove (6, 26) on the inner side,
said annular bead (5, 25) ending in an inward directed annular web (8, 28) which during pressing bites into the outer side of the pipe (2, 22) and thereby severs the shaped body (9, 29).

2. Method of claim 1, **characterized in that** a shaped body is used that is shaped as a (segment of a) ring (9, 29) which in particular extends for more than 180° after having been fitted, wherein in particular a ring (9, 29) is used that is closed except for at least a gap (10).

3. Method of claim 1 or 2, **characterized in that** a shaped body (9, 29) is used that comprises at least one projection (11, 32), and that the shaped body (9, 29) is positioned such that the projection or the projections (11, 32) extend into said gap (12, 34) or protrude therefrom.

4. Method of one of claims 1 to 3, **characterized in that** a shaped body (9, 29) is used that is made in particular of brittle plastic material.

5. Method of one of claims 1 to 4, **characterized in that** a workpiece (1, 21) is used that is fitted over the other workpiece (2, 22) and is bent radially so far inward at the front end side that, prior to pressing, a gap (12, 34) remains free there and/or that a press fitting is used as a workpiece (1, 21) that is adapted to be slipped onto the pipe (2, 22).

6. Method of one of claims 1 to 5, **characterized in that** the shaped body (9, 29) is connected with one workpiece, in particular in a positive manner, prior to fitting the workpieces one into the other.

7. Method of one of claims 1 to 6, **characterized in that** a shaped body (29) is used whose outer circumference is formed with a projection (31), and that the shaped body (29) and the workpiece are assembled such that the projection engages the annular groove (26).

8. Sleeve-shaped press fitting (1, 21) for connection with a pipe (2, 22), wherein the press fitting (1, 21) has openings for inserting pipes (2, 22), which openings are defined by opening edges, and the press fitting is combined with at least one shaped body (9, 29), wherein the shaped body (9, 29) is adapted to be combined or is combined with the press fitting (1, 21) such that, in the region of the opening edge, the shaped body (9, 29) partly protrudes into the press fitting (1, 21) and partly protrudes from the same,
**characterized in that**
the press fitting (1, 21) has at least one annular groove (6, 26) in the region of the opening, said opening being defined by radially inward directed annular web (8, 28).

9. Press fitting of claim 8, **characterized in that** the press fitting (21) and the shaped body (29) are joined in a positive manner, preferably joined by clipping, and in particular have complementary locking elements (26, 31).

10. Press fitting of claim 8 or 9, **characterized in that** the shaped body is shaped as a (segment of a) ring (9, 29) which in particular extends for more than 180° and, preferably, is closed except for at least a gap (10).

11. Press fitting of one of claims 8 to 10, **characterized in that** the shaped body (29) has at least one projection (31) on the outer side fitting or engaging into at least one recess in the inner side of the press fitting (21), the projection preferably being formed as an annular web (31) and the recess being formed as an annular groove (26).

12. Press fitting of one of claims 8 to 11, **characterized in that** the shaped body (9, 29) has at least one projection (11, 32) that partly extends into the press fitting (1, 21) or partly protrudes therefrom, in particular **in that** the shaped body (9, 29) has a plurality of projections (11, 32) distributed over the circumference of the opening of the press fitting (1, 21) and/or the projection or the projections (11, 32) extends or extend axially.

13. Press fitting of one of claims 8 to 12, **characterized in that** the shaped body (9, 29) is made in particular of brittle plastic material.

14. Press fitting of one of claims 8 to 13, **characterized in that** the two end faces of the press fitting (1, 21) each have an opening for the insertion of pipes (2, 22) and that a shaped body (9, 29) is associated to each opening.

15. Press fitting of one of claims 8 to 14, **characterized in that** a pipe (2, 22) is inserted into at least one opening of the press fitting (1, 21), wherein an annular gap (12, 34) exists between the opening edge of the press fitting (1, 21) and the pipe (2, 22), into which gap the shaped body (9, 29) partly engages.

## Revendications

1. Procédé de raccordement de deux pièces usinées, à savoir d'un raccord à presser (1, 21) avec un tube (2, 22) ou avec un autre raccord à presser, au moyen d'un outil de sertissage, dans lequel les pièces usinées sont emmanchées l'une dans l'autre puis les pièces usinées, dans la zone de leur chevauchement radial, sont déformées de manière plastique dans le sens radial au moyen de l'outil de sertissage, procédé dans lequel, dans la zone de chevauchement, est prévu au moins un corps moulé (9, 29), lequel corps moulé, lors du sertissage, est soumis à une pression telle qu'il est sectionné au moins à un endroit,
dans lequel le corps moulé (9, 29), une fois les pièces usinées emmanchées, s'engrène en partie dans une fente (12, 34) laissée libre entre les pièces usinées et dépasse en partie vers l'extérieur de celle-ci et en ce que la partie du corps moulé (9, 29) dépassant de la fente (12, 34) est séparée de la partie du corps moulé se trouvant à l'intérieur de la fente (12, 34) uniquement lorsque le sertissage est réalisé de manière conforme, **caractérisé en ce que**
au niveau d'au moins une face avant de l'une des pièces usinées est formé un bourrelet annulaire (5, 25) pourvu, sur le côté interne, d'une rainure annulaire (6, 26),
le bourrelet annulaire (5, 25) se terminant par un talon annulaire (8, 28) dirigé vers l'intérieur, lequel talon, lors du sertissage, s'enfonce dans la partie externe du tube (2, 22) et sectionne ainsi le corps moulé (9, 29).

2. Procédé selon la revendication 1, **caractérisé en ce que** l'on met en oeuvre un corps moulé réalisé sous la forme d'une bague (partielle) (9, 29) s'étendant, en particulier après l'emmanchement, sur plus de 180°, et dans lequel on met en oeuvre en particulier une bague fermée (9, 29) à l'exception d'une fente (10).

3. Procédé selon la revendication 1 ou 2, **caractérisé en ce que** l'on met en oeuvre un corps moulé (9, 29) qui présente au moins une protubérance (11, 32), et **en ce que** le corps moulé (9, 29) est placé de telle sorte que la ou les protubérances (11, 32) s'étendent à l'intérieur de la fente (12, 34) ou dépassent de celle-ci.

4. Procédé selon l'une quelconque des revendications 1 à 3, **caractérisé en ce que** l'on met en oeuvre un corps moulé (9, 29) fait en particulier de matière plastique cassante.

5. Procédé selon l'une quelconque des revendications 1 à 4, **caractérisé en ce que** l'on met en oeuvre une pièce usinée (1, 21) qui est emmanchée sur l'autre pièce usinée (2, 22) et qui est incurvée radialement sur la face avant sur une distance telle qu'une fente (12, 34) reste libre avant le sertissage et/ou en que l'on met en oeuvre en tant que pièce usinée (1, 21) un raccord à presser qui peut être emmanché sur le tube (2, 22).

6. Procédé selon l'une quelconque des revendications 1 à 5, **caractérisé en ce que**, avant l'emmanchement des pièces usinées, le corps moulé (9, 29) est relié à l'une des pièces usinées, en particulier par remboîtement.

7. Procédé selon l'une quelconque des revendications 1 à 6, **caractérisé en ce que** l'on met en oeuvre un corps moulé (29) formant, sur la circonférence externe, une protubérance (31) et **en ce que** le corps moulé (29) et la pièce usinée sont assemblés de telle sorte que la protubérance (31) s'engrène dans la rainure annulaire (26).

8. Raccord à presser (1, 21) en forme de douille pour le raccordement avec un tube (2, 22), dans lequel le raccord à presser (1, 21) présente des ouvertures délimitées par des bords d'ouverture destinées à l'insertion de tubes (2 , 22) et le raccord à presser est combiné à au moins un corps moulé (9, 29), le corps moulé (9, 29) pouvant être combiné, ou étant combiné, au raccord à presser (1, 21) de telle sorte que le corps moulé (9, 29), au niveau du bord d'ouverture, dépasse en partie vers l'intérieur du raccord à presser (1, 21) et en partie vers l'extérieur de celui-ci,
**caractérisé en ce que**
le raccord à presser (1, 21), au niveau de l'ouverture, présente au moins une rainure annulaire (6, 26), l'ouverture étant délimitée par un talon annulaire (8, 28) dirigé radialement vers l'intérieur.

9. Raccord à presser selon la revendication 8, **caractérisé en ce que** le raccord à presser (21) et le corps moulé (29) sont reliés par emboîtement, de préférence assemblés par encliquetage et présentent en particulier des éléments d'encliquetage (26, 31) complémentaires.

10. Raccord à presser selon la revendication 8 ou 9, **caractérisé en ce que** le corps moulé est réalisé sous la forme d'une bague (partielle) (9, 29) s'étendant en particulier sur plus de 180° et étant réalisée de préférence sous une forme fermée à l'exception d'une fente (10).

11. Raccord à presser selon l'une quelconque des revendications 8 à 10, **caractérisé en ce que** le corps moulé (29) présente, sur la face externe, au moins une protubérance (31) complémentaire à, ou s'engrenant dans, au moins un évidement au niveau de la face interne du raccord à presser (21), dans lequel la protubérance est réalisée de préférence sous la forme d'un talon annulaire (31) et l'évidement sous la forme d'une rainure annulaire (26).

12. Raccord à presser selon l'une quelconque des revendications 8 à 11, **caractérisé en ce que** le corps moulé (9, 29) présente au moins une protubérance (11, 32) dépassant en partie vers l'intérieur du raccord à presser (1, 21) ou dépassant en partie vers l'extérieur de celui-ci, en particulier **en ce que** le corps moulé (9, 29) présente plusieurs protubérances (11, 32) réparties sur la circonférence de l'ouverture du raccord à presser (1, 21) et/ou **en ce que** la ou les protubérances (11, 32) s'étendent dans le sens axial.

13. Raccord à presser selon l'une quelconque des revendications 8 à 12, **caractérisé en ce que** le corps moulé (9, 29) est fait en particulier de matière plastique cassante.

14. Raccord à presser selon l'une quelconque des revendications 8 à 13, **caractérisé en ce que** le raccord à presser (1, 21) présente, au niveau des deux faces avant, respectivement une ouverture pour l'insertion de tubes (2, 22) et **en ce qu'**un corps moulé (9, 29) est associé à chaque ouverture.

15. Raccord à presser selon l'une quelconque des revendications 8 à 14, **caractérisé en ce qu'**un tube (2, 22) est inséré dans au moins une ouverture du raccord à presser (1, 21), une fente annulaire (12, 34) dans laquelle le corps moulé (9, 29) s'engrène en partie étant présente entre le bord de l'ouverture du raccord à presser (1, 21) et le tube (2, 22).
